# EUROPÄISCHE PATENTSCHRIFT

(11) **EP 2 385 912 B1**
(45) Veröffentlichungstag und Bekanntmachung des Hinweises auf die Patenterteilung: **24.06.2015**
(21) Anmeldenummer: 09774867.7
(22) Anmeldetag: 30.11.2009
(51) Int. Cl.: B60T 7/04, B60T 13/575, B60T 8/32, B60T 13/74

(54) **BREMSKRAFTVERSTÄRKER**
BRAKE BOOSTER
SERVOFREIN

(30) Priorität: 30.11.2009 DE 102009047263; 18.12.2008 DE 102008054862
(43) Veröffentlichungstag der Anmeldung: 16.11.2011
(73) Patentinhaber: Robert Bosch GmbH, 70442 Stuttgart (DE)
(72) Erfinder: VOLLERT, Herbert, 71665 Vaihingen/Enz (DE); HOENLE, Stephan, 70825 Korntal-Muenchingen (DE)
(86) Internationale Anmeldenummer: PCT/EP2009/066031
(87) Internationale Veröffentlichungsnummer: WO 2010/069740

(56) Entgegenhaltungen:
- EP-A1- 1 538 050
- EP-A2- 0 668 201
- EP-A2- 1 964 739
- DE-A1- 4 141 353
- DE-A1- 10 057 557
- DE-A1-102007 016 136
- FR-A1- 2 860 474

## Beschreibung

### Stand der Technik

Die Erfindung betrifft einen Bremskraftverstärker mit den Merkmalen des Oberbegriffs des Anspruchs **1**, der insbesondere für Kraftfahrzeuge vorgesehen ist. Im Rahmen dieser Erfindung umfasst der Begriff "Steuerung" auch eine Regelung.

In Personenkraftwagen sind heutzutage Unterdruck-Bremskraftverstärker üblich, die eine Unterdruckkammer mit einer Membran in ihrem Innern aufweisen, die die Unterdruckkammer in zwei Kammern unterteilt. In beiden Kammern herrscht Unterdruck, d.h. niedrigerer Druck als der Umgebungsdruck. Bei einer Bremsbetätigung wird eine der beiden Kammern mit Umgebungsluft beaufschlagt (nicht unbedingt mit Umgebungsdruck, sondern mit Umgebungsdruck nur bei maximaler Kraftverstärkung), wodurch eine Kraft auf die Membran ausgeübt wird, die als Fremdkraft zusätzlich zu einer Muskelkraft auf einen Kolben eines hydraulischen Hauptbremszylinders ausgeübt wird. Die Unterdruckkammer mit der Membran kann als Aktuator, nämlich als pneumatischer- oder Unterdruck-Aktuator des Bremskraftverstärkers aufgefasst werden.

Bekannt sind auch elektromechanische Bremskraftverstärker, die den Vorteil aufweisen, dass sie keinen Unterdruck benötigen. Sie sind deswegen ohne Unterdruckpumpe in Kraftfahrzeugen mit Dieselmotoren verwendbar, die bauartbedingt keinen (ausreichenden) Unterdruck im Ansaugtrakt für den Betrieb eines Unterdruck-Bremskraftverstärkers aufweisen. Auch bei modernen Ottomotoren mit Benzindirekteinspritzung oder Magermixmotoren genügt der Unterdruck im Ansaugtrakt teilweise nicht für r den Betrieb eines Unterdruck-Bremskraftverstärkers. Weitere Einsatzgebiete für elektromechanische Bremskraftverstärker sind Hybridfahrzeuge mit einem kombinierten Antrieb durch einen oder mehrere Elektromotoren und einen Verbrennungsmotor oder Elektrofahrzeuge.

Die Offenlegungsschrift DE 100 57 557 A1 offenbart einen elektromechanischen Bremskraftverstärker mit einem elektromechanischen Aktuator, dessen Aktuatorkraft als Fremdkraft zusätzlich zu einer von einem Fahrzeugführer ausgeübten Muskelkraft auf einen Kolben eines Hauptbremszylinders ausgeübt wird. Als elektromechanischen Aktuator weist der bekannte elektromechanische Bremskraftverstärker einen Elektromagneten oder einen Linearmotor auf. Denkbar ist beispielsweise auch ein Elektromotor mit nachgeschaltetem Rotations/Translations-Umsetzungsgetriebe, wobei dem Elektromotor und dem Umsetzungsgetriebe ein Untersetzungsgetriebe zwischengeschaltet sein kann. Die Aufzählung ist nicht abschließend.

Weitere Bremskraftverstärker sind aus den Entgegenhaltungen FR 2 860 474 A1, WO 2010/069658 A2 und EP 0 668 201 A2 bekannt.

Den Bremskraftverstärkern ist gemein, dass sie ein Eingangselement, das vom Fahrzeugführer mit Muskelkraft beaufschlagbar ist, den bereits genannten Aktuator und ein Ausgangselement aufweisen, das den Kolben eines Hauptbremszylinders mit einer Betätigungskraft beaufschlagt. Denkbar ist, dass der Kolben des Hauptbremszylinders bereits das Ausgangselement bildet, normalerweise handelt es sich allerdings um zwei Bauteile. Das Eingangselement bekannter Bremskraftverstärker ist üblicherweise eine Kolbenstange, die gelenkig mit einem (Fuß-) Bremspedal verbunden ist. Auch ein Handbremshebel kann das Eingangselement bilden oder gelenkig mit der Kolbenstange des Bremskraftverstärkers verbunden sein. Der Bremskraftverstärker summiert eine vom Aktuator erzeugte Aktuatorkraft und die vom Fahrzeugführer auf das Eingangselement ausgeübte Muskelkraft und überträgt die beiden Kräfte als Betätigungskraft auf das Ausgangselement. Das Verhältnis der Aktuatorkraft zur Muskelkraft kann konstant oder veränderlich sein. Die Summation der Aktuatorkraft und der Muskelkraft zur Betätigungskraft erfolgt normalerweise mechanisch im Bremskraftverstärker.

Das Ausgangselement bekannter Bremskraftverstärker ist üblicherweise eine sog. Druckstange.

Zur Übertragung und Summation der Aktuatorkraft und der Muskelkraft weist der bekannte elektromechanische Bremskraftverstärker eine sog. Reaktionsscheibe auf. Hierbei handelt es sich um eine gummielastische Scheibe, die vom Aktuator und vom Eingangselement beaufschlagt wird und die ihrerseits das Ausgangselement beaufschlagt. Die Reaktionsscheibe bewirkt ein gedämpftes Einkoppeln der Aktuatorkraft und ermöglicht Relativbewegungen zwischen dem Muskelkraft betätigten Eingangselement und dem Aktuator.

### Offenbarung der Erfindung

Der erfindungsgemäße steuerbare Bremskraftverstärker mit den Merkmalen des Anspruchs **1** weist ein verformbares Übertragungselement auf, das die vom Fahrzeugführer auf das Eingangselement ausgeübte Muskelkraft auf das Ausgangselement überträgt. Im Unterschied zur Reaktionsscheibe des bekannten elektromechanischen Bremskraftverstärkers wird das Übertragungselement des erfindungsgemäßen Bremskraftverstärkers nicht vom Aktuator beaufschlagt, dessen Aktuatorkraft in anderer Weise eingekoppelt wird. Erfindungsgemäß weist der Bremskraftverstärker einen Verstärkerkörper auf und wird in Abhängigkeit einer eine Relativauslenkung des Verstärkerkörpers und des Eingangselements repräsentierenden Größe betrieben.
Steuerbar ist in diesem Kontext als steuerbar und/oder regelbar verstanden und wird im folgenden nicht mehr unterschieden.

Vorzugsweise weist auch der Aktuator ein verformbares Übertragungselement zur Übertragung der Aktuatorkraft auf das Ausgangselement auf. Dies ist Gegenstand des Anspruchs **13**.

Vorzugsweise ist das Übertragungselement elastisch verformbar, also beispielsweise ein gummielastisches Element oder ein Federelement, beispielsweise eine Schraubendruckfeder. Das Übertragungselement kann eine Federkonstante oder eine nicht-lineare Federkennlinie aufweisen. Eine Scheibenform des Übertragungselements ist nicht erforderlich. Das Übertragungselement kann auch ein inkompressibles Fluid aufweisen, das beispielsweise in einem konstanten Volumen beispielsweise in einem Balg oder einem Beutel eingeschlossen ist. Verallgemeinernd kann das Übertragungselement als Element aufgefasst werden, das die Aktuatorkraft des Aktuators bzw. die Muskelkraft des Eingangselements in Abhängigkeit von einer Formänderung und/oder Formänderungsgeschwindigkeit auf das Ausgangselement überträgt. Das Übertragungselement kann dämpfend, insbesondere schwingungs- und/oder stoßdämpfend wirken. Die Kraftübertragungseigenschaften des Übertragungselements bzw. der Übertragungselemente können veränderlich, beispielsweise auch steuerbar sein. Es ist denkbar, dass das Übertragungselement ein nicht Newton'sches Fluid aufweist. Beispielsweise mit einem magneto- oder elektrorheologischen Fluid, dessen Viskosität sich durch ein magnetisches- oder elektrisches Feld beeinflussen lässt, ist eine Änderung der Kraftübertragungseigenschaften des Übertragungselements möglich. Die vorstehenden Ausführungen gelten sowohl für das Übertragungselement des Eingangselements als auch, sofern vorhanden, für das Übertragungselement des Aktuators.

Vorteil der Erfindung ist, dass durch die voneinander unabhängige Einkopplung der Aktuatorkraft und der Muskelkraft die Einkopplung erheblich variabler ist als bei bekannten Bremskraftverstärkern. Das Verhältnis der Aktuatorkraft zur Muskelkraft, also das Verstärkungsverhältnis, ist in einem weiten Bereich steueroder regelbar, es sind eine verhältnismäßig große Relativbewegung des Eingangselements gegenüber dem Aktuator sowie unterschiedliche Geschwindigkeiten und Beschleunigungen des Eingangselements und des Aktuators möglich. Pedalgefühl und Bremsgefühl lassen sich in weiten Bereichen einstellen bzw. ändern und beispielsweise an äußere Einflüsse wie Fahrzeuggeschwindigkeit, Straßenbeschaffenheit oder auch einen Wunsch eines Fahrzeugführers wie beispielsweise einen Sportmodus anpassen. Dabei meint Pedalgefühl, was der Fahrzeugführer am Bremspedal (oder einem Handbremshebel) spürt, wie groß die Muskelkraft an welcher Position des Bremspedals, auch abhängig von der Pedalgeschwindigkeit, ist. Das Bremsgefühl ist die vom Fahrzeugführer gespürte Verzögerung während einer Bremsung. Des weiteren ist eine auch Jump-in genannte Springer-Funktion möglich, bei der in einem unteren Kraftbereich (Bremsdruck beispielsweise kleiner als **15** bar) die Steuerung oder Regelung der Aktuatorkraft weggesteuert vom Weg des Eingangselements bei nahezu konstanter Muskelkraft erfolgt. Die Betätigungskraft kann in diesem Bereich vollständig vom Aktuator aufgebracht werden. Das Betreiben des Bremskraftverstärkers in Abhängigkeit der Relativauslenkung des Verstärkerkörpers sowie des Eingangselements hat zum Vorteil, dass ein Betreiben des Bremskraftverstärkers nur mit Wegsensoren möglich ist und somit auf Kraftsensoren verzichtet werden kann, was die Kosten senkt.

Die Unteransprüche haben vorteilhafte Ausgestaltungen und Weiterbildungen der im Anspruch **1** angegebenen Erfindung zum Gegenstand.

Zur Verwirklichung der vorstehend erläuterten Springer-Funktion sieht Anspruch **2** einen Leerweg des Eingangselements vor, bevor es das Ausgangselement über das Übertragungselement beaufschlagt. Dies wird durch Betreiben des Bremskraftverstärkers in einem ersten Betriebsmodus erreicht, indem die Relativauslenkung zwischen Verstärkerkörper und Eingangselement so eingestellt wird, dass der Leerweg nicht überwunden wird. In einem zweiten Betreibsmodus ist vorgesehen, dass der Leerweg durch Einstellen der Relativauslenkung überwunden wird. Die Aufteilung in einen ersten und zweiten Betriebsmodus ist nicht zwangsläufig als Abfolge zu verstehen, der Bremskraftverstärker kann vorteilhafterweise auch nur im ersten oder nur im zweiten Betriebsmodus betrieben werden.

Bis der Leerweg überwunden ist, lässt sich das Eingangselement kraftfrei bzw. normalerweise gegen die Kraft einer Rückstellfeder eines Bremspedals, also mit vernachlässigbar kleiner Muskelkraft, bewegen. Gemäß den Merkmalen des Anspruchs **3** wird in dem ersten Betriebsmodus die Bremskraft alleine durch den Aktuator aufgebracht. Im zweiten Betreibsmodus wird dagegen die Bremskraft durch die Aktutatorkraft und/oder durch die Muskelkraft aufgebracht. Mit Bremskraft ist die Radbremskraft der Fahrzeugräder gemeint.

Im ersten Betreibsmodus kann der erfindungsgemäße Bremskraftverstärker derart betrieben werden, dass eine feste Relativauslenkung zwischen Eingangselement und Verstärkerkörper vorliegt. Insbesondere kann vorgesehen sein, dass die Relativauslenkung auf Null eingestellt wird. Durch ein solches Betreiben des Bremskraftverstärkers ist sichergestellt, dass der Leerweg nicht überwunden wird.
In vorteilhafter Weise kann im zweiten Betriebsmodus vorgesehen sein, den Bremskraftverstärker anhand eines vorgegebenen Zusammenhangs aus einem Verschiebeweg des Verstärkerkörpers und der Relativauslenkung einzustellen. So kann eine Charakteristik für den Bremskraftverstärker anhand dieses vorgebbaren Zusammenhangs vorgegeben werden.

In vorteilhafter Weise kann ein Übergang von erstem Betriebsmodus in den zweiten Betriebsmodus des Bremskraftverstärkers oder auch umgekehrt abhängig vom vorliegenden Druck im Bremssystem, von dem Verschiebeweg des Verstärkerkörpers und/oder vom Verschiebeweg des Eingangselements sein. Über diese Abhängigkeit kann der Übergang zwischen erstem Betriebsmodus und zweitem Betriebsmodus dann selbstverständlich auch eingestellt werden. Auf diese Weise kann der Bremskraftverstärker beispielsweise bei niedrigem Druck im Bremssystem im ersten Betriebsmodus betrieben werden und bei höherem Druck im Bremssystem im zweiten Betreibsmodus.

In vorteilhafter Weise gemäß den abhängigen Ansprüchen **7** und **8** kann der oben erwähnte Zusammenhang zwischen Verschiebeweg des Verstärkerkörpers und einzustellender Relativauslenkung in Form einer Kennlinie im Fahrzeug hinterlegt sein, beispielsweise in einem Steuergerät des Bremskraftverstärkers. Diese Kennlinie kann beispielweise durch den Fahrer ausgewählt werden oder auch automatisch an Umgebungsbedingungen oder Fahrsitutationen angepasst werden. Beispielsweise kann bei einer Autobahnfahrt eine andere Kennlinie vorgesehen sein, als bei einer Fahrt in einer Stadt oder bei einer Bergabfahrt im Gebirge.

Gemäß den Ansprüchen **9** und **10** lässt sich die bei vorliegendem Verschiebeweg aufzubringende Muskelkraft durch Einstellen der Relativauslenkung einstellen. Ebenso ist das Verhältnis von Aktuatorkraft zu Muskelkraft durch Einstellen der Relativauslenkung einstellbar.

Des Weiteren kann vorgesehen sein, dass das Verstärkungsverhältnis, also ein Verhältnis von Aktuatorkraft zu Muskelkraft und/oder der Zusammenhang zwischen Verschiebeweg und einzustellender Relativauslenkung in Abhängigkeit eine Geschwindigkeit und/oder einer Beschleunigung des Verstärkerkörpers und/oder des Eingangselements eingestellt wird. Mit Geschwindigkeit beziehungsweise Beschleunigung ist beispielsweise eine Betätigungsgeschwindigkeit beziehungsweise Betätigungsbeschleunigung gemeint. Dies ermöglicht das Vorsehen einer anderen Kennlinie beispielsweise bei sehr schneller Betätigung des Bremspedals in einer Notsituation um so eine erhöhte / insbesondere die maximale Bremskraft für die Bremsung zur Verfügung zu stellen.

Zu Bestimmung der zum Betreiben des Bremskraftverstärkers notwendigen Gröβen wie Verschiebeweg, Relativauslenkung, Geschwindigkeit und/oder Beschleunigung ist vorgesehen Signale von geeigneten Sensoren zu verwenden. Dabei können die Sensoren diese Signale entweder direkt oder indirekt zur Verfügung stellen. Ebenso ist es möglich diese Signale in weiteren Ermittlungsschritten beispielsweise rechnerisch weiterzuverarbeiten.

Die Verwirklichung der Springer-Funktion ist auch möglich, wenn das Übertragungselement des Eingangselements keine Vorspannung aufweist (Anspruch **16**). Die Erfindung beschränkt sich nicht auf Unterdruck- und elektromechanische Bremskraftverstärker, sondern sie erstreckt sich auf Bremskraftverstärker allgemein, unabhängig welcher Bauart sie sind. Insbesondere ist sie allerdings für einen elektromechanischen Bremskraftverstärker vorgesehen, also für einen Bremskraftverstärker, der einen elektromechanischen Aktuator aufweist.

Durch die genannten Ansprüche ist die bereits weiter vorn angesprochene Springer-Funktion darstellbar, die auch als "Jump in" bezeichnet wird. Der erste Betriebsmodus ist hierbei mit der Springer-Funktion zu identifizieren. Bei niedriger Bremskraft einer Fahrzeugbremsanlage wird dabei die auf beispielsweise einen Hauptbremszylinder ausgeübte Betätigungskraft vollständig vom Aktuator des Bremskraftverstärkers aufgebracht. Genau genommen handelt es sich um eine Fremdkraftbremsung ausschließlich durch die Aktuatorkraft, die eine Fremdkraft ist, ohne Muskelkraft eines Fahrzeugführers. Mit Bremskraft ist die Radbremskraft der Fahrzeugräder gemeint. Niedrig ist im Verhältnis zur maximalen Bremskraft bei Radschlupf zu verstehen. Zur Charakterisierung einer niedrigen Bremskraft kann bei einer hydraulischen Fahrzeugbremsanlage der Radbremsdruck in Radbremszylindern herangezogen werden. Bei einer niedrigen Bremskraft ist der Radbremsdruck beispielsweise nicht größer als etwa **15** bar. Die Steuerung des Bremskraftverstärkers erfolgt insbesondere weggesteuert in Abhängigkeit von einem Pedalweg, wobei die niedrige Bremskraft auch durch einen im Verhältnis zu einem maximalen Pedalweg kurzen Pedalweg charakterisiert sein kann. Ein erfindungsgemäßes Betreiben herkömmlicher Bremskraftverstärker ist nicht ausgeschlossen. Herkömmliche Bremskraftverstärker sind beispielsweise Unterdruck-Bremskraftverstärker oder elektromechanische Bremskraftverstärker mit einer elastischen Reaktionsscheibe als verformbares Übertragungselement, das sowohl die von einem Fahrzeugführer auf das Eingangselement des Bremskraftverstärkers ausgeübte Muskelkraft als auch die Aktuatorkraft des Aktuators auf das Ausgangselement des Bremskraftverstärkers überträgt. Vorteilhaft ist das erfindungsgemäße Betreiben des Bremskraftverstärkers wegen der voneinander unabhängigen Einkopplung der Aktuatorkraft und der Muskelkraft. Hier führt die Erhöhung der Aktuatorkraft nicht zwingend zu einer Rückwirkung auf die Muskelkraft. Bei einem elektromechanischen Bremskraftverstärker mit einer Reaktionsscheibe wird diese von der Aktuatorkraft zusammengedrückt und verformt sich deswegen in ihrer Mitte elastisch zurück in Richtung des Eingangselements des Bremskraftverstärkers. Durch die Verformung übt die Reaktionsscheibe eine Kraft auf das Eingangselement aus, die einer Betätigungsrichtung entgegengerichtet ist und die durch Muskelkraft vom Fahrzeugführer ausgeglichen werden muss. Eine Bremsbetätigung ausschließlich durch die Aktuatorkraft ist deswegen bei einem elektromechanischen Bremskraftverstärker mit einer Reaktionsscheibe nicht oder nur begrenzt möglich.

### Kurze Beschreibung der Zeichnung

Die Erfindung wird nachfolgend anhand zweier in der Zeichnung dargestellter Ausführungsformen näher erläutert. Die beiden Figuren zeigen Achsschnitte zweier Ausführungsformen erfindungsgemäßer Bremskraftverstärker. Die Zeichnung ist als schematisierte und vereinfachte Darstellung zum Verständnis und zur Erläuterung der Erfindung zu verstehen.

### Ausführungsformen der Erfindung

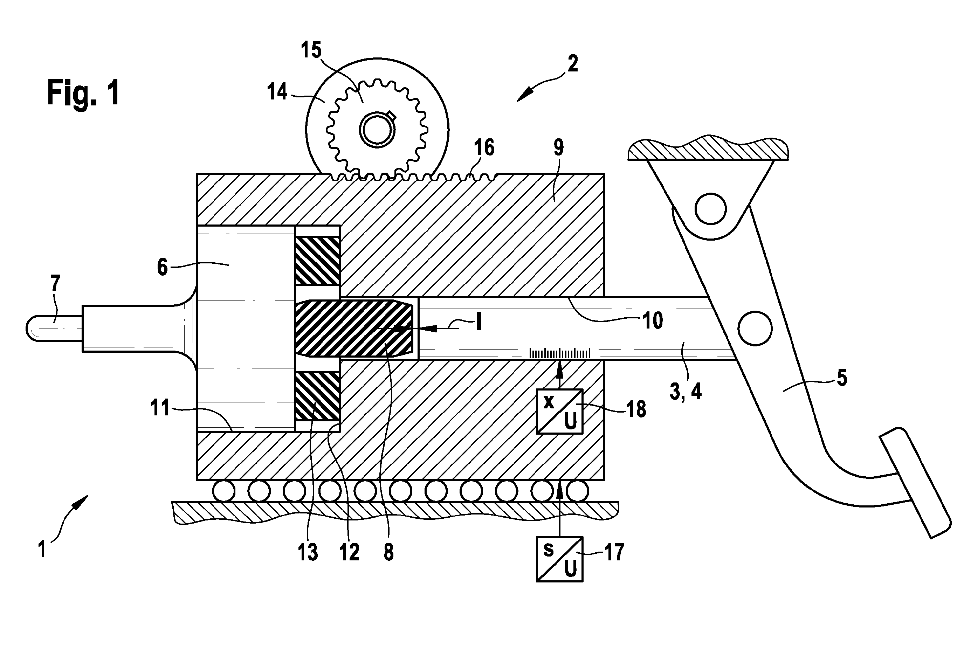

Der in Figur **1** dargestellte, erfindungsgemäße Bremskraftverstärker **1** ist ein elektromechanischer Bremskraftverstärker **1** mit einem noch zu erläuternden elektromechanischen Aktuator **2** und einer Kolbenstange **3**, die allgemein auch als Muskelkraft betätigbares Eingangselement **4** aufgefasst werden kann. Die Kolbenstange **3** ist gelenkig mit einem Bremspedal **5** verbunden. Des weiteren weist der Bremskraftverstärker **1** ein Ausgangselement **6** mit einem kolbenförmigen Fuß und einer Druckstange **7** auf, mit der in an sich bekannter Weise ein nicht dargestellter Primär- oder Stangenkolben eines ebenfalls nicht dargestellten hydraulischen Hauptbremszylinders einer hydraulischen Fahrzeugbremsanlage mit einer Betätigungskraft beaufschlagbar ist.

Zwischen dem Ausgangselement **6** und der Kolbenstange **3** ist ein gummielastisches, bolzenförmiges Übertragungselement **8** angeordnet. Über das Übertragungselement **8** ist eine Muskelkraft, die mit dem Bremspedal **5** auf die Kolbenstange **3** ausgeübt wird, auf das Ausgangselement **6** des Bremskraftverstärkers **1** übertragbar. Das Übertragungselement **8**, das elastische und dämpfende Eigenschaften aufweist, kann aus Gummi oder einem gummielastischen Kunststoff bestehen.

Der Aktuator **2** weist einen Verstärkerkörper **9** auf, der in der dargestellten Ausführungsform zylindrisch ist und ein axiales Durchgangsloch **10** aufweist, in dem die Kolbenstange **3** axial verschieblich aufgenommen ist. Ebenfalls ist das Übertragungselement **8** der Kolbenstange **3** axial verschieblich im Durchgangsloch **10** des Verstärkerkörpers **9** aufgenommen, wobei das Durchgangsloch **10** des Verstärkerkörpers **9** zusätzlich wie eine Art Fassung oder Ummantelung des Übertragungselements **8** wirkt und dessen radiale Ausdehnung bei einer axialen Kraftbeaufschlagung begrenzt.

Das Übertragungselement **8** ist etwas kürzer als der Abstand zwischen der Kolbenstange **3** und dem Ausgangselement **6**, wenn sich der Bremskraftverstärker **1** in der dargestellten, nicht betätigten Grundstellung befindet. Dadurch weisen die Kolbenstange **3** und das Bremspedal **5** einen Leerweg I auf, um den sie sich bewegen lassen, bevor die Kolbenstange **3** über das Übertragungselement **8** die Muskelkraft auf das Ausgangselement **6** des Bremskraftverstärkers **1** überträgt.

Das Durchgangsloch **10** des Verstärkerkörpers **9** mündet in eine zylindrische Ansenkung **11**, die einen größeren Durchmesser als das Durchgangsloch **10** aufweist und in der das Ausgangselement **6** axial verschieblich aufgenommen ist. Zwischen dem Ausgangselement **6** und einem Grund **12** der Ansenkung **11** ist ein gummielastisches Übertragungselement **13** angeordnet, das in der dargestellten Ausführungsform der Erfindung ringförmig ist und das Übertragungselement **8** der Kolbenstange **3** konzentrisch umschließt. Das ringförmige Übertragungselement **13** des Aktuators **2** überträgt eine Aktuatorkraft vom Verstärkerkörper **9** auf das Ausgangselement **6**. Das ringförmige Übertragungselement **13** weist ebenfalls elastische und dämpfende Eigenschaften auf und kann aus Gummi oder einem gummielastischen Kunststoff bestehen.

Der Verstärkerkörper **9** ist wie die Kolbenstange **3** und das Ausgangselement **6** axial verschiebbar, was in der Zeichnung symbolisch durch eine Wälzlagerung an der Unterseite des Verstärkerkörpers **9** dargestellt ist.

Zum Antrieb weist der Aktuator **2** einen Elektromotor **14** auf, mit dem über ein Zahnrand **15** der Verstärkerkörper **9** in axialer Richtung antreibbar ist. Das Zahnrad **15** kämmt mit einer Zahnstange **16** des Verstärkerkörpers **9.** Dem Zahnrad **15** und dem Elektromotor **14** kann ein nicht dargestelltes Untersetzungsgetriebe zwischengeschaltet sein. Anstelle eines elektromotorischen Antriebs kann der elektromechanische Aktuator **2** beispielsweise auch einen elektromagnetischen Antrieb oder einen Linearmotor aufweisen (nicht dargestellt). Ein elektromechanischer Aktuator **2** ist zwar bevorzugt, allerdings nicht zwingend, denkbar sind auch ein pneumatischer Unterdruck- oder Druck- bzw. Überdruck-Aktuator oder ein hydraulischer Aktuator. Die Aufzählung ist nicht abschließend.

Der elektromechanische Bremskraftverstärker **1** weist einen Wegsensor **17,** mit dem eine Verschiebung und damit auch eine Geschwindigkeit und eine Beschleunigung des Verstärkerkörpers **9,** und einen Positionssensor **18,** mit dem eine Relativbewegung, also eine Verschiebung der Kolbenstange **3** gegenüber dem Verstärkerkörper **9,** messbar sind.

Ein elastisches Übertragungselement **13** zwischen dem Verstärkerkörper **9** und dem Ausgangselement **6** zur Übertragung der Aktuatorkraft ist nicht zwingend, es ist auch eine starre Ankopplung des Ausgangselements **6** an den Aktuator **2** möglich, beispielsweise durch eine unmittelbare Anlage des Ausgangselements **6** am Grund **12** der Ansenkung **11** des Verstärkerkörpers **9** oder durch Zwischenlage eines starren Rings beispielsweise aus Stahl zwischen dem Ausgangselement **6** und dem Grund **12** der Ansenkung **11** (nicht dargestellt). Der Verstärkerkörper **9,** der Elektromotor **14** und das mit der Zahnstange **16** des Verstärkerkörpers **9** kämmende Zahnrad **15** bilden den elektromechanischen Aktuator **2** des Bremskraftverstärkers **1**.

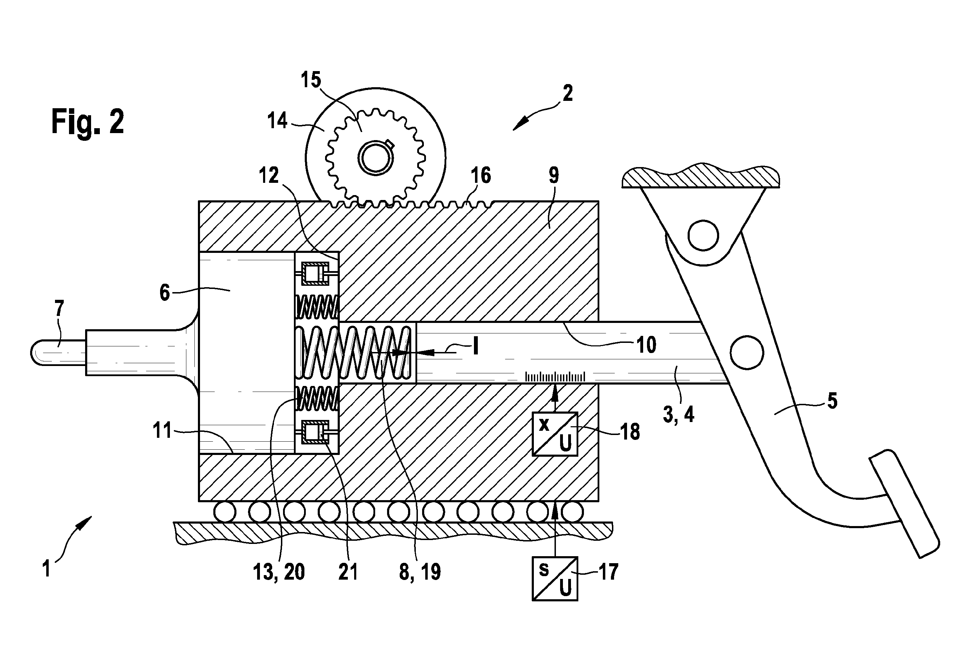

Bei dem erfindungsgemäßen Bremskraftverstärker **1** aus Figur **2** sind im Vergleich mit Figur **1** die beiden Übertragungselemente **8, 13** ersetzt, und zwar das Übertragungselement **8** der Pedalstange **3** durch ein Federelement **19** und das ringförmige Übertragungselement **13** des Aktuators **2** durch eine Anzahl Federelemente **20,** die auf einem gedachten konzentrischen Kreis um das Federelement **19** der Pedalstange **3** herum angeordnet sind. Den Federelementen **20** des Aktuators **2** sind Dämpfer **21** zugeordnet, die mechanisch parallel wirkend angeordnet sind. Die Federelemente **19, 20** sind in der dargestellten Ausführungsform Schraubendruckfedern. Das Federelement **19** der Kolbenstange **3** bildet deren elastisches Übertragungselement **8,** die Federelemente **20** und Dämpfer **21** des Aktuators **2** bilden dessen federndes und dämpfendes Übertragungselement **13**. Im übrigen ist der Bremskraftverstärker **1** aus Figur **2** übereinstimmend mit demjenigen aus Figur **1** ausgebildet und funktioniert in gleicher Weise. Gleiche Teile weisen in beiden Figuren gleiche Bezugszahlen auf. Zur Vermeidung von Wiederholungen wird zur Erläuterung der Figur **2** auf die Ausführungen zu Figur **1** verwiesen.
Zu einer Bremsbetätigung wird wie üblich das Bremspedal **5** niedergetreten um dadurch eine Muskelkraft über die Kolbenstange **3** und ihr gummielastisches Übertragungselement **8** auf das Ausgangselement **6** zu übertragen, welches mit seiner Druckstange **7** den nicht dargestellten Kolben des Hauptbremszylinders beaufschlagt. Eine nicht dargestellte elektronische Regelung bestromt den Elektromotor **14** des Aktuators **2** so, dass sich der Verstärkerkörper **9** ebenfalls in Richtung des Ausgangselements **6** bewegt. Über sein Übertragungselement **13** übt er eine Aktuatorkraft auf das Ausgangselement **6** aus. Die von der Kolbenstange **3** ausgeübte Muskelkraft und die vom Verstärkerkörper **9** ausgeübte Aktuatorkraft werden mechanisch mit dem Ausgangselement **6** summiert und bilden die Betätigungskraft, welche über die Druckstange **7** den Kolben des Hauptbremszylinders beaufschlagt. Geregelt wird die Relativbewegung der Kolbenstange **3** gegenüber dem Verstärkerkörper **9,** also eine Verschiebung der Kolbenstange **3** gegenüber dem Verstärkerkörper **9,** die mit dem Positionssensor **18** gemessen wird.

Die Relativbewegung kann auf "**0**" geregelt werden, d.h. so, dass sich der Verstärkerkörper **9** synchron mit der Kolbenstange **3** mitbewegt. Auch ist die Regelung eines Vorlaufs oder eines Nachlaufs des Verstärkerkörpers **9** gegenüber der Kolbenstange **3** möglich, d.h. dass sich der Verstärkerkörper **9** weiter oder weniger weiter verschiebt als die Kolbenstange **3**.

Durch das Betreiben des Bremskraftverstärkers anhand der Verschiebung von Verstärkerkörper **9** und Kolbenstange **3** und unter Ausnutzen des Leerwegs I können zwei Betriebsmodi des Bremskraftverstärkers realisiert werden.

In einem ersten Betriebsmodus kann vorgesehen sein, den Bremskraftverstärker derart zu betreiben, dass der Leerweg I nicht überwunden wird. Dies ist möglich indem bei der Regelung des Bremskraftverstärkers immer eine Verschiebung des Verstärkerkörpers **9** in Bezug auf die Kolbenstange **3** eingestellt wird, und somit die Kolbenstange **3** nicht zur Anlage an das elastische Element **8, 19** kommt. Dazu kann eine feste Verschiebung des Verstärkerkörpers **9** in Bezug auf die Kolbenstange **3** eingestellt werden, insbesondere eine Verschiebung von Null.
In diesem Betriebsmodus ist die sog. Springer-Funktion (auch "Jump-in" genannt) realisiert. So kann durch die Regelung, beispielsweise zu Beginn einer Bremsbetätigung, also am Anfang der Verschiebung der Kolbenstange **3**, eine Betätigungskraft im wesentlichen nur mit dem Aktuator **2** erzeugt werden. Die auf das Bremspedal **5** ausgeübte Muskelkraft ist näherungsweise konstant und niedrig. Die Aktuatorkraft wird in Abhängigkeit von der Verschiebung der Kolbenstange **3** geregelt. Die Verwirklichung der Springer-Funkuntion ist auch ohne den Leerweg I möglich, wenn das Übertragungselement **8** der das Eingangselement **4** bildenden Kolbenstange **3** keine oder eine allenfalls geringe Vorspannung aufweist.

In einem zweiten Betriebsmodus kann vorgesehen sein, den Bremskraftverstärker derart zu betreiben, das der Leerweg I überwunden ist. Die geschieht durch Einstellen einer Verschiebung von Eingangselement **3** zu Verstärkerkörper **9** so dass der Leerweg überwunden ist. In diesem zweiten Betriebsmodus wird die Betätigungskraft durch den Aktuator **2** sowie durch den Fahrer per Muskelkraft aufgebracht.
Im zweiten Betriebsmodus wird der Bremskraftverstärker anhand eines vorgegebenen Zusammenhangs zwischen der einzustellenden Verschiebung x und der Position des Verstärkerkörpers s betrieben. Dieser Zusammenhang kann in Form einer Kennlinie im Fahrzeug hinterlegt sein.

In beiden Betriebsmodi kann die Regelung in Abhängigkeit vom Verschiebeweg des Verstärkerkörpers **9**, also in Abhängigkeit von dessen Position, seiner Geschwindigkeit und/oder Beschleunigung geregelt werden. Anstelle der Verschiebung des Verstärkerkörpers **9** des Aktuators **2** ist auch eine Messung der Verschiebung der Kolbenstange **3** möglich (nicht dargestellt).

Der Verstärkungsfaktor des Bremskraftverstärkers **1,** also das Verhältnis von Aktuatorkraft zu Muskelkraft, lässt sich in einem weiten Bereich frei einstellen und zwar insbesondere auch in Abhängigkeit des Verschiebewegs, also der Position, der Geschwindigkeit und/oder der Beschleunigung des Verstärkerkörpers **9** bzw. der Pedalstange **3.** Die Verstärkung kann also bei einer schnellen Pedalbetätigung eine andere als bei einer langsamen Pedalbetätigung sein. Das Einstellen des Verstärkungsfaktors erfolgt durch Einstellen der jeweiligen Verschiebung x bei vorliegender Position s des Verstärkerkörpers **9,** beziehungsweise bei vorliegender Position der Pedalstange **3.** Geht man beispielsweise von einer linearen Feder als Übertragungselement **8, 19** aus, so wird deutlich, dass über die Verschiebung x der Kraftanteil des Fahrers eingestellt werden kann. Die Feder stützt sich dabei am Hauptbremszylinder ab. Je weiter der Bremskraftverstärker den Fahrer in die beispielhafte Feder **8, 19** eintreten lässt, desto größer wird die benötigte Kraft des Fahrers. Wie weit der Fahrer in die Feder eintritt lässt sich durch Einstellen der Verschiebung x festlegen. Da sich die Feder dabei am Hauptbremszylinder abstützt steigt der Fahreranteil an der Bremsung und die Verstärkung sinkt. Sorgt der Verstärker dafür, dass die Verschiebung x kleiner wird, so muss der Fahrer die Feder nicht so weit komprimieren und die spürbare Kraft für den Fahrer wird kleiner. Der Verstärkungsfaktor ergibt sich somit durch die bereits genannte Kennlinie welche die einzustellende Verschiebung x mit der Position des Verstärkerkörpers s verknüpft. Implizit kann der Verstärkungsfaktor somit von der Betätigungspositon abhängen, bzw. mit dieser variieren.
Ebenso kann die bei vorliegender Position s des Verstärkerkörpers **9,** beziehungsweise bei vorliegender Position der Pedalstange **3** aufzubringende Muskelkraft des Fahrers durch Einstellen der Verschiebung x eingestellt werden. Wieder ausgehend von einer linearen Feder **8,19,** ist ersichtlich, dass durch Einstellen der Verschiebung x durch den Bremskraftverstärker die Fußkraft des Fahrers eingestellt werden kann. Vorteilhafterweise wird dies als Funktion des Betätigungswegs eingestellt.

Die Regelung des Bremskraftverstärkers kann ebenso anhand einer Kennlinie geschehen, die den Zusammenhang zwischen einzustellender Verschiebung x und der Position der Pedalstange **3** beschreibt, was hier aber nicht näher ausgeführt wird.

Beide Betriebsmodi können für sich alleine, oder auch in Kombination miteinander zum Betreiben des Bremskraftverstärkers bei einer Bremsbetätigung genutzt werden. Sie müssen nicht zwangsläufig hintereinander ausgeführt werden.

Zur Darstellung einer Verstärkerkennlinie und damit verbunden eines Pedalgefühls kann jedoch der Bremskraftverstärker zuerst im ersten Betriebsmodus betrieben werden und darauf folgend im zweiten Betriebsmodus. Der Übergang zwischen erstem und zweitem Betriebsmodus kann von dem im Bremssystem vorliegenden Druck, von der Verschiebung s des Verstärkerkörpers **9** und/oder von der Verschiebung des Eingangselements **3** abhängen und somit anhand dieser Größen eingestellt werden.

Eine Änderung einer solchen Verstärkerkennlinie auf Wunsch eines Fahrzeugführers ist möglich, beispielsweise kann der Fahrzeugführer zwischen verschiedenen Modi wählen, beispielsweise zwischen einem Normal- und einem Sportmodus umschalten. Ebenso ist es möglich, die Verstärkerkennlinie anhand von Umgebungsbedingungen des Fahrzeugs und/oder Fahrsituationen auszuwählen.

Die Auswahl einer Kennlinie muss sich nicht auf beide Betriebsmodi beziehen. Es ist ebenso möglich nur die Kennlinie im zweiten Betriebsmodus zu verändern und das Verstärkerverhalten im ersten Betriebsmodus, gegebenenfalls samt Übergangspunkt zum zweiten Betriebsmodus, unverändert zu lassen.

Eine Hilfsbremsung bei Ausfall des Aktuators **2** ist per Muskelkraft durch Niedertreten des Bremspedals **5** möglich. Die Muskelkraft wird über die Kolbenstange **3** und das Übertragungselement **8** auf das Ausgangselement **6** übertagen. Der Aktuator **2** wird bei der Hilfsbremsung nicht mitbewegt, es muss deswegen keine Muskelkraft zu seiner Bewegung aufgebracht werden.

## Patentansprüche

1. Steuerbarer Bremskraftverstärker, mit einem mit Muskelkraft betätigbaren Eingangselement (4), mit einem Aktuator (2) und mit einem Ausgangselement (6), mit dem ein Kolben eines Hauptbremszylinders mit einer Betätigungskraft beaufschlagbar ist, und das vom Eingangselement (4) mit einer Muskelkraft und/oder vom Aktuator (2) mit einer Aktuatorkraft beaufschlagbar ist, wobei der Aktuator einen Verstärkerkörper (9) aufweist, wobei der steuerbare Bremskraftverstärker in Abhängigkeit einer eine Relativauslenkung (x) des Verstärkerkörpers (9) und des Eingangselements (4) repräsentierenden Größe betrieben wird, **dadurch gekennzeichnet, dass**
- das Eingangselement (4) ein verformbares Übertragungselement (8, 19) aufweist, wobei das Übertragungselement (8,19)_ die Muskelkraft des Eingangselements (4) auf das Ausgangselement (6) überträgt und das nicht vom Aktuator (2) beaufschlagt wird.

2. Steuerbarer Bremskraftverstärker nach Anspruch **1, dadurch gekennzeichnet, dass**, das Eingangselement (**4**) einen Leerweg (I) aufweist, bevor es das Ausgangselement (**6**) über das Übertragungselement (**8, 19**) beaufschlagt wobei in einem ersten Betriebsmodus durch Einstellen der Relativauslenkung (x) der Bremskraftverstärker derart betrieben wird, dass der Leerweg (I) nicht überwunden wird und/oder in einem zweiten Betriebsmodus der Bremskraftverstärker durch Einstellen der Relativauslenkung (x) derart betrieben wird, dass der Leerweg (I) überwunden ist.

3. Steuerbarer Bremskraftverstärker nach Anspruch **2**, **dadurch gekennzeichnet, dass**
- in dem ersten Betriebsmodus die Bremskraft alleine durch die Aktuatorkraft aufgebracht wird
- in dem zweiten Betriebsmodus die Bremskraft durch die Aktuatorkraft und/oder durch die Muskelkraft aufgebracht wird.

4. Steuerbarer Bremskraftverstärker nach Anspruch **2** oder **3, dadurch gekennzeichnet, dass** im ersten Betriebsmodus der Bremskraftverstärker derart betrieben wird, dass eine feste, insbesondere keine Relativauslenkung (x) zwischen Eingangselement (**4**) und Verstärkerkörper (**9**) vorliegt.

5. Steuerbarer Bremskraftverstärker nach Anspruch **2** oder **3, dadurch gekennzeichnet, dass** im zweiten Betriebsmodus der Bremskraftverstärker derart betrieben wird, dass die Relativauslenkung (x) anhand eines vorgegebenen Zusammenhangs zwischen der Relativauslenkung (x) und einem Verschiebweg (s) des Verstärkerkörpers (**9**) eingestellt wird.

6. Steuerbarer Bremskraftverstärker nach wenigstens einem der Ansprüche 2 bis 5, **dadurch gekennzeichnet, dass** ein Übergang zwischen erstem und zweiten Betriebsmodus abhängig von dem im Bremssystem vorliegenden Druck und/oder von dem Verschiebeweg (s) des Verstärkerkörpers und/oder eines Verschiebewegs des Eingangselements ist, insbesondere abhängig davon eingestellt wird.

7. Steuerbarer Bremskraftverstärker nach Anspruch **4** und/oder **5**, **dadurch gekennzeichnet, dass** der Zusammenhang zwischen vorliegendem Verschiebeweg (s) des Verstärkerkörpers (**9**) und einzustellender Relativauslenkung (x) des Verstärkerkörpers (**9**) und des Eingangselements (**4**) in Form wenigstens einer Kennlinie hinterlegt ist, insbesondere in einem Steuergerät des Bremskraftverstärkers hinterlegt ist.

8. Steuerbarer Bremskraftverstärker nach Anspruch **7**, **dadurch gekennzeichnet, dass** die zu verwendende Kennlinie durch den Fahrer ausgewählt wird und/oder an Umgebungsbedingungen des Fahrzeugs angepasst wird.

9. Steuerbarer Bremskraftverstärker nach Anspruch **5**, **dadurch gekennzeichnet, dass** die bei vorliegendem Verschiebeweg (s) aufzubringende Muskelkraft durch Einstellen der Relativauslenkung (x) eingestellt wird.

10. Steuerbarer Bremskraftverstärker nach einem der vorhergehenden Ansprüche, **dadurch gekennzeichnet, dass** das Verhältnis von Aktuatorkraft zu Muskelkraft durch Betreiben des Bremskraftverstärkers durch Einstellen der Relativauslenkung (x) eingestellt wird.

11. Steuerbarer Bremskraftverstärker nach einem der vorhergehenden Ansprüche, **dadurch gekennzeichnet, dass**
- das Verhältnis von Aktuatorkraft zu Muskelkraft und/oder
- der Zusammenhang zwischen Verschiebeweg (s) und einzustellender Relativauslenkung (x)
in Abhängigkeit
- einer Geschwindigkeit und/oder
- einer Beschleunigung
des Verstärkerkörpers (**9**) und/oder des Eingangselements (**4**) eingestellt wird.

12. Steuerbarer Bremskraftverstärker nach einem der vorhergehenden Ansprüche, **dadurch gekennzeichnet, dass** zur Bestimmung des Verschiebewegs (s), der Relativauslenkung (x), der Geschwindigkeit und/oder der Beschleunigung des Verstärkerkörpers (**9**) und/oder des Eingangselements (**4**) Signale von Sensoren (**17**, **18**) herangezogen werden.

13. Steuerbarer Bremskraftverstärker nach Anspruch **1**, **dadurch gekennzeichnet, dass** der Aktuator (**2**) ein verformbares Übertragungselement (**13**, **20, 21**) aufweist, das die Aktuatorkraft vom Aktuator (**2**) auf das Ausgangselement (**6**) überträgt.

14. Steuerbarer Bremskraftverstärker nach Anspruch **1**, **dadurch gekennzeichnet, dass** das Übertragungselement (**8**, **19**; **13**, **20**, **21**) des Eingangselements (**4**) und/oder des Aktuators (**2**) elastisch verformbar und/oder dämpfend ist.

15. Steuerbarer Bremskraftverstärker nach Anspruch **1, dadurch gekennzeichnet, dass** das Eingangselement (**4**) und/oder der Aktuator (**2**) ein elastisches Element (**8**, **19**; **13**, **20**) und einen Dämpfer (**21**) aufweisen.

16. Steuerbarer Bremskraftverstärker nach Anspruch **1, dadurch gekennzeichnet, dass** das Übertragungselement (**8**, **19**) des Eingangselements (**4**) elastisch ist und keine Vorspannung aufweist.

## Claims

1. Controllable brake booster, with an input element (4) actuable by muscle power, with an actuator (2) and with an output element (6) with which a piston of a master brake cylinder can be acted upon with an actuating force and which can be acted upon with muscle power by the input element (4) and/or with an actuator force by the actuator (2), wherein the actuator has a booster body (9), wherein the controllable brake booster is operated depending on a variable representing a relative deflection (x) of the booster body (9) and of the input element (4), **characterized in that**
- the input element (4) has a deformable transmission element (8, 19), wherein the transmission element (8, 19) transmits the muscle power of the input element (4) to the output element (6) and is not acted upon by the actuator (2).

2. Controllable brake booster according to Claim **1**, **characterized in that** the input element (**4**) has an idling distance (I) before it acts upon the output element (**6**) via the transmission element (**8**, **19**), wherein, in a first operating mode, the brake booster is operated, by adjustment of the relative deflection (x), in such a manner that the idling distance (I) is not overcome, and/or, in a second operating mode, the brake booster is operated, by adjustment of the relative deflection (x), in such a manner that the idling distance (I) is overcome.

3. Controllable brake booster according to Claim **2, characterized in that**
- in the first operating mode, the brake force is applied solely by the actuator force,
- in the second operating mode, the brake force is applied by the actuator force and/or by the muscle power.

4. Controllable brake booster according to Claim **2** or **3, characterized in that**, in the first operating mode, the brake booster is operated in such a manner that there is a fixed relative deflection (x), in particular no relative deflection, between input element (**4**) and booster body (**9**).

5. Controllable brake booster according to Claim **2** or 3, **characterized in that**, in the second operating mode, the brake booster is operated in such a manner that the relative deflection (x) is adjusted on the basis of a predetermined relationship between the relative deflection (x) and a displacement distance (s) of the booster body (**9**).

6. Controllable brake booster according to at least one of Claims **2** to **5, characterized in that** a transition between first and second operating mode is dependent on the pressure present in the brake system and/or on the displacement distance (s) of the booster body and/or a displacement distance of the input element, in particular is adjusted depending thereon.

7. Controllable brake booster according to Claim **4** and/or **5, characterized in that** the relationship between existing displacement distance (s) of the booster body (**9**) and relative deflection (x), which is to be adjusted, of the booster body (**9**) and the input element (**4**) is stored in the form of at least one characteristic, in particular is stored in a control device of the brake booster.

8. Controllable brake booster according to Claim **7**, **characterized in that** the characteristic to be used is selected by the driver and/or is adapted to the environmental conditions of the vehicle.

9. Controllable brake booster according to Claim **5**, **characterized in that** the muscle power to be applied in the case of the existing displacement distance (s) is adjusted by adjustment of the relative deflection (x).

10. Controllable brake booster according to one of the preceding claims, **characterized in that** the ratio of actuator force to muscle power is adjusted by adjusting the relative deflection (x) by operation of the brake booster.

11. Controllable brake booster according to one of the preceding claims, **characterized in that**
- the ratio of actuator force to muscle power, and/or
- the relationship between displacement distance (s) and relative deflection (x) which is to be adjusted
is adjusted in dependence on
- a speed and/or
- an acceleration
of the booster body (**9**) and/or of the input element (**4**).

12. Controllable brake booster according to one of the preceding claims, **characterized in that** signals from sensors (**17**, **18**) are used in order to determine the displacement distance (s), the relative deflection (x), the speed and/or the acceleration of the booster body (**9**) and/or of the input element (**4**).

13. Controllable brake booster according to Claim **1**, **characterized in that** the actuator (**2**) has a deformable transmission element (**13**, **20**, **21**) which transmits the actuator force from the actuator (**2**) to the output element (**6**).

14. Controllable brake booster according to Claim 1, **characterized in that** the transmission element (**8**, **19**; **13**, **20**, **21**) of the input element (**4**) and/or of the actuator (**2**) is elastically deformable and/or damping.

15. Controllable brake booster according to Claim **1**, **characterized in that** the input element (**4**) and/or the actuator (**2**) have/has an elastic element (**8**, **19**; **13**, **20**) and a damper (**21**).

16. Controllable brake booster according to Claim **1**, **characterized in that** the transmission element (**8**, **19**) of the input element (**4**) is elastic and does not have any pretensioning.

## Revendications

1. Servofrein commandable, comprenant un élément d'entrée (4) pouvant être actionné par la force musculaire, un actionneur (2) et un élément de sortie (6), avec lequel un piston d'un cylindre de freinage principal peut être sollicité avec une force d'actionnement, et qui peut être sollicité par l'élément d'entrée (4) par une force musculaire et/ou par l'actionneur (2) par une force d'actionneur, l'actionneur présentant un corps d'amplificateur (9), le servofrein commandable étant entraîné en fonction d'une grandeur représentant une déviation relative (x) du corps d'amplificateur (9) et de l'élément d'entrée (4), **caractérisé en ce que**
- l'élément d'entrée (4) présente un élément de transfert déformable (8, 19), l'élément de transfert (8, 19) transférant la force musculaire de l'élément d'entrée (4) à l'élément de sortie (6) et n'étant pas sollicité par l'actionneur (2).

2. Servofrein commandable selon la revendication 1, **caractérisé en ce que** l'élément d'entrée (4) présente une course à vide (I), avant qu'il ne sollicite l'élément de sortie (6) par le biais de l'élément de transfert (8, 19), et le servofrein, dans un premier mode de fonctionnement, étant entraîné par l'ajustement de la déviation relative (x) de telle sorte que la course à vide (I) ne soit pas dépassée et/ou, dans un deuxième mode de fonctionnement, le servofrein étant entraîné par l'ajustement de la déviation relative (x) de telle sorte que la course à vide (I) soit dépassée.

3. Servofrein commandable selon la revendication 2, **caractérisé en ce que**
- dans le premier mode de fonctionnement, la force de freinage est appliquée uniquement par la force d'actionneur,
- dans le deuxième mode de fonctionnement, la force de freinage est appliquée par la force d'actionneur et/ou par la force musculaire.

4. Servofrein commandable selon la revendication 2 ou 3, **caractérisé en ce que** dans le premier mode de fonctionnement, le servofrein est entraîné de telle sorte qu'il se produise une déviation relative fixe (x), en particulier qu'il ne se produise aucune déviation relative (x), entre l'élément d'entrée (4) et le corps d'amplificateur (9) .

5. Servofrein commandable selon la revendication 2 ou 3, **caractérisé en ce que** dans le deuxième mode de fonctionnement, le servofrein est entraîné de telle sorte que la déviation relative (x) soit ajustée à l'aide d'une relation prédéfinie entre la déviation relative (x) et une course de déplacement (s) du corps d'amplificateur (9).

6. Servofrein commandable selon au moins l'une quelconque des revendications 2 à 5, **caractérisé en ce qu'**une transition entre le premier et le deuxième mode de fonctionnement est dépendante de la pression existant dans le système de freinage et/ou de la course de déplacement (s) du corps d'amplificateur et/ou d'une course de déplacement de l'élément d'entrée, en particulier est ajustée en fonction de ceux-ci.

7. Servofrein commandable selon la revendication 4 et/ou 5, **caractérisé en ce que** la relation entre la course de déplacement présente (s) du corps d'amplificateur (9) et la déviation relative à ajuster (x) du corps d'amplificateur (9) et de l'élément d'entrée (4) est consignée sous la forme d'au moins une courbe caractéristique, en particulier est consignée dans un appareil de commande du servofrein.

8. Servofrein commandable selon la revendication 7, **caractérisé en ce que** la courbe caractéristique à utiliser est sélectionnée par le conducteur et/ou est adaptée à des conditions ambiantes du véhicule.

9. Servofrein commandable selon la revendication 5, **caractérisé en ce que** la force musculaire devant être appliquée en présence de la course de déplacement (s) est ajustée par l'ajustement de la déviation relative (x).

10. Servofrein commandable selon l'une quelconque des revendications précédentes, **caractérisé en ce que** le rapport de la force d'actionneur à la force musculaire est ajusté par le fonctionnement du servofrein par l'ajustement de la déviation relative (x).

11. Servofrein commandable selon l'une quelconque des revendications précédentes, **caractérisé en ce que**
- le rapport de la force d'actionneur à la force musculaire et/ou
- la relation entre la course de déplacement (s) et la déviation relative à ajuster (x)
sont ajustés en fonction
- d'une vitesse et/ou
- d'une accélération
du corps d'amplificateur (9) et/ou de l'élément d'entrée (4).

12. Servofrein commandable selon l'une quelconque des revendications précédentes, **caractérisé en ce que** pour déterminer la course de déplacement (s), la déviation relative (x), la vitesse et/ou l'accélération du corps d'amplificateur (9) et/ou de l'élément d'entrée (4), on utilise des signaux de capteurs (17, 18).

13. Servofrein commandable selon la revendication 1, **caractérisé en ce que** l'actionneur (2) présente un élément de transfert déformable (13, 20, 21) qui transfère la force d'actionneur de l'actionneur (2) à l'élément de sortie (6).

14. Servofrein commandable selon la revendication 1, **caractérisé en ce que** l'élément de transfert (8, 19 ; 13, 20, 21) de l'élément d'entrée (4) et/ou de l'actionneur (2) est déformable élastiquement et/ou a un effet d'amortissement.

15. Servofrein commandable selon la revendication 1, **caractérisé en ce que** l'élément d'entrée (4) et/ou l'actionneur (2) présentent un élément élastique (8, 19 ; 13, 20) et un amortisseur (21).

16. Servofrein commandable selon la revendication 1, **caractérisé en ce que** l'élément de transfert (8, 19) de l'élément d'entrée (4) est élastique et ne présente aucune précontrainte.
